# EUROPÄISCHE PATENTSCHRIFT

(11) **EP 2 865 198 B1**
(45) Veröffentlichungstag und Bekanntmachung des Hinweises auf die Patenterteilung: **27.04.2016**
(21) Anmeldenummer: 12810099.7
(22) Anmeldetag: 19.12.2012
(51) Int. Cl.: H04W 4/00, H04W 4/04, H04L 29/08, G06F 17/30

(54) **VERFAHREN ZUM EINTRAGEN VON KENNUNGSDATEN EINES FAHRZEUGS IN EINE BENUTZERDATENBANK EINER INTERNET-SERVEREINRICHTUNG**
METHOD FOR ENTERING IDENTIFICATION DATA OF A VEHICLE INTO A USER DATABASE OF AN INTERNET SERVER DEVICE
PROCÉDÉ D'INSCRIPTION DES DONNÉES D'IDENTIFICATION D'UN VÉHICULE DANS UNE BANQUE DE DONNÉES D'UTILISATEURS D'UN DISPOSITIF SERVEUR DANS L'INTERNET

(30) Priorität: 23.06.2012 DE 102012012565
(43) Veröffentlichungstag der Anmeldung: 29.04.2015
(73) Patentinhaber: Audi AG, 85045 Ingolstadt (DE)
(72) Erfinder: HANKE, Alexander, 85051 Ingolstadt (DE)
(74) Vertreter: Brandt, Kai
(86) Internationale Anmeldenummer: PCT/EP2012/005245
(87) Internationale Veröffentlichungsnummer: WO 2013/189510

(56) Entgegenhaltungen:
- EP-A1- 1 437 693
- EP-A1- 2 211 499
- US-A1- 2011 029 777
- US-A1- 2011 202 471

## Beschreibung

Die Erfindung betrifft ein Verfahren zum Eintragen von Kennungsdaten eines Fahrzeugs in eine Benutzerdatenbank einer Internet-Servereinrichtung. Zu der Erfindung gehören auch ein Kraftwagen, ein Datenträger sowie ein mobiles Kommunikationsgerät, mittels welchen das erfindungsgemäße Verfahren durchgeführt werden kann. Unter einem mobilen Kommunikationsgerät ist hierbei insbesondere ein Mobiltelefon oder ein Smartphone oder ein Tablet-PC (PC - Personalcomputer) zu verstehen.
Im Zusammenhang mit dem Einstellen von Parametern eines Geräts eines Kraftwagens, also etwa dessen Standheizung, ist bekannt, dies dadurch zu vereinfachen, dass der Benutzer die Einstellungen an einem Computer, z.B. in seinem Büro oder mobil über ein Smartphone, durchführen kann. Um dies zu ermöglichen, wird mittels des Computers über das Internet eine Netzwerkverbindung zu einer Internet-Servereinrichtung aufgebaut, wo sich der Benutzer an einem Internet-Portal authentifizieren kann und dann dort einzelne Parameter der von seinem Kraftwagen bereitgestellten Funktionalitäten festlegen kann. So kann er beispielsweise den Startzeitpunkt für einen Heizbetrieb der erwähnten Standheizung einstellen. Genau lassen sich Parameter auslesen, wie etwa der Kilometerstand oder Tankfüllstand des Kraftwagens. Die von dem Benutzer am Internetportal eingegebenen Parameterwerte bzw. die erfragten Fahrzeugdaten werden dabei zwischen der Servereinrichtung und dem Kraftwagen über eine weitere Netzwerkverbindung ausgetauscht. Hierzu weist der Kraftwagen eine entsprechende Kommunikationseinrichtung auf, über welche durch die Servereinrichtung die Steuergeräte des Kraftwagens konfiguriert bzw. abgefragt werden können. Die Kommunikationseinrichtung kann hierzu beispielsweise ein Mobilfunkmodul (GPRS, UMTS, LTE) und einen Router umfassen. Ein Beispiel für ein Internetportal, über das die Fahrzeugbedienung per Internet ermöglicht wird, ist dasjenige des Internetdienstes "myAudi", der von dem Unternehmen Audi AG angeboten wird.

Das Konfigurieren eines Fahrzeugs über das Internet kann allerdings ein Sicherheitsrisiko darstellen. Einer unbefugten Person darf es nicht gelingen, Daten aus dem Fahrzeug auszulesen oder sogar Funktionalitäten des Fahrzeugs zu beeinflussen. Aus diesem Grund muss für einen Benutzer eines Fahrzeuges, der den Internetdienst nutzen möchte, in der Servereinrichtung ein Benutzerkonto angelegt werden und dann das Fahrzeug beispielsweise über die Fahrgestellnummer oder allgemein über weitere Kennungsdaten des Fahrzeugs, dort für den Benutzer registriert werden. Schließlich muss zum Abschluss dieser Verkopplung als Eigentumsnachweis ein am Internetportal angezeigter Geheimcode manuell im Fahrzeug eingegeben werden.

Eine weitere Sicherheitslücke kann sich im Zusammenhang der Nutzung eines mobilen Kommunikationsgeräts in einem Fahrzeug ergeben. Mittels solcher mobilen Kommunikationsgeräte, also etwa Smartphones, kann über die genannte Kommunikationseinrichtung des Fahrzeugs telefoniert oder auch ein Zugang ins Internet ermöglicht werden. Wenn man ein Smartphone im Fahrzeug zum Telefonieren mit der Freisprechanlage benutzen möchte, so muss das Smartphone heutzutage vor der Benutzung einmalig per Bluetooth manuell gekoppelt werden. Zur sicheren Kopplung ist nach dem Suchen der Bluetooth-Gegenstelle des Fahrzeugs von dem Smartphone aus zur Authentifizierung eine Eingabe und/oder Bestätigung einer Bluetooth-PIN (PIN - Personal Identification Number) erforderlich. Die Eingabe kann auch beidseitig gefordert werden, also sowohl aufseiten des Smartphones als auch aufseiten des Fahrzeugs. Wenn man zusätzlich am Smartphone über das Fahrzeug breitbandig Daten mit dem Internet austauschen möchte, so ist zur sicheren Anbindung des Smartphones an die Kommunikationseinrichtung über eine drahtlosen Netzwerkverbindung (WLAN - Wireless Local Area Network) nach dem Stand der Technik der SSID (Service Set Identifier) des Fahrzeug-Internetzugangspunkts zu bestätigen und beispielsweise der WPA2-Schlüssel (WPA2 - Wi-Fi Protected Access 2) einzugeben. Die Eingabe des Bluetooth-PIN und des krytischen WPA2-Schlüssels erfolgt in der Regel manuell und stellt deshalb für viele Anwender eine erhebliche Hürde dar, da die auszuwählenden Menüpunkte nämlich oft tief in den Setup-Menüs des Smartphones und des Infotainmentsystems eines Fahrzeugs verborgen sind.

Möchte ein Benutzer nach einem Neu- oder Gebrauchtkauf eines Fahrzeugs bei dessen erster Inbetriebnahme sämtliche der erwähnten Funktionalitäten aktivieren (Fahrzeugkonfiguration über Internet oder Smartphone, Bluetooth, WLAN), muss der Benutzer eine Vielzahl von teilweise umfangreichen Zugangscodes entweder im Fahrzeug oder an seinem Smartphone oder über seinen PC am Internetportal eingeben.

Eine Aufgabe der vorliegenden Erfindung besteht darin, den Aufbau einer sicheren Datenverbindung zu einem Fahrzeug für dessen Benutzer zu vereinfachen.

Die Aufgabe wird durch ein Verfahren gemäß Patentanspruch 1, einen Kraftwagen gemäß Patentanspruch 13, einen Datenträger gemäß Patentanspruch 14 und ein mobiles Kommunikationsgerät gemäß Patentanspruch 15 gelöst. Vorteilhafte Weiterbildungen des Verfahrens sind durch die Unteransprüche gegeben.

Das erfindungsgemäße Verfahren setzt an der Stelle an, wo es darum geht, die Kennungsdaten eines Fahrzeugs, also etwa dessen Fahrgestellnummer, in eine Benutzerdatenbank einer Internet-Servereinrichtung, im Folgenden kurz Servereinrichtung, einzutragen. Wie bereits ausgeführt, muss dazu eine Netzwerkverbindung über das Internet zu der Servereinrichtung aufgebaut werden. Ein Benutzer authentifiziert sich dann an einem Internetportal der Servereinrichtung über entsprechende Benutzerdaten z. B. Benutzername und Passwort. Anschließend werden dann die Kenndaten des Fahrzeugs über die Netzwerkverbindung zu der Servereinrichtung übertragen und dort durch die Servereinrichtung als Teil des Datensatzes des Benutzers in einer Benutzerdatenbank gespeichert. Von da an gilt in der Benutzerdatenbank eine feste Zuordnung zwischen der Identität des Benutzers und derjenigen des Fahrzeugs. Um das Eintragen der Kennungsdaten zu vereinfachen, sieht das erfindungsgemäße Verfahren nun vor, die Netzwerkverbindung durch ein mobiles Kommunikationsgerät aufzubauen. Bei diesem kann es sich beispielsweise um ein Smartphone, ein Mobiltelefon oder ein Tablet-PC handeln. Das mobile Kommunikationsgerät wird zusätzlich mittels einer Datenübertragungseinrichtung, beispielsweise einem USB-Kabel (USB - Universal Serial Bus), durch Austausch optischer Informationen (z.B. Fotografieren eines QR-Codes) oder durch drahtlose Übertragung über eine Nahbereichsfunkschnittstelle (NFC - Near Field Communication) mit dem Fahrzeug gekoppelt. Über diese Datenübertragungseinrichtung werden dann die Kenndaten durch das Kommunikationsgerät direkt aus dem Fahrzeug empfangen. Sie können dann ohne ein weiteres Zutun des Benutzers an das Internetportal übertragen werden. Die manuelle Eingabe der Daten am Internetportal durch den Benutzer kann somit entfallen. Das Koppeln des Kommunikationsgeräts mit dem Fahrzeug kann auch vor dem Aufbau der Netzwerkkopplung zur Servereinrichtung geschehen. Die Kenndaten werden dann einfach in dem Kommunikationsgerät zwischengespeichert.

Die Erfindung weist den Vorteil auf, dass sich der Benutzer für die Aktivierung der Funktionalität "Fahrzeugkonfiguration über das Internet" lediglich einmalig am Internetportal oder Smartphone z.B. mit Benutzername und Passwort authentifizieren muss. Alle übrigen Geheimcodes können dann automatisch über die Übertragungseinrichtung und die Netzwerkverbindung vom Fahrzeug zur Servereinrichtung übertragen werden. Als zusätzlichen Aufwand muss sich der Benutzer mit seinem mobilen Kommunikationsgerät als Eigentumsnachweis nur einmal in das Fahrzeug hinein begeben.

Die Verwendung einer USB-Verbindung oder allgemein einer Kabelverbindung weist hierbei den Vorteil auf, dass die Übertragung besonders abhörsicher ist.

Zusätzlich zu der Kabelverbindung oder anstelle von dieser sieht eine Weiterbildung des Verfahrens vor, dass die Übertragungseinrichtung umfasst, dass durch das Fahrzeug die Kenndaten als graphische Information auf einem Bildschirm des Fahrzeugs angezeigt werden. Insbesondere werden die Kenndaten hierbei als 2D-Bar-Code oder als QR-Code (QR - Quick Response) bereitgestellt. Diese Weiterbildung beruht auf der Erkenntnis, dass praktisch alle Smartphones und auch viele andere Kommunikationsgeräte über eine Fotokamera verfügen, die ideal dazu geeignet ist, in Verbindung mit einem entsprechenden Programm einen 2D-Barcode oder QR-Code einzulesen und die darin enthaltenen Daten auf dem Kommunikationsgerät weiter zu verwenden. Entsprechend wird bei der Weiterbildung des Verfahrens durch eine Kamera des mobilen Kommunikationsgeräts die grafische Information erfasst und die darin enthaltenen Kennungsdaten extrahiert. Die Verwendung von grafischen Informationen weist den Vorteil auf, dass ein Benutzer keine zusätzlichen Kabel bereithalten und Einstecken muss. Zudem ist auch dieser Übertragungsweg besonders sicher, da die grafische Information in der Regel nur über eine kurze Distanz hin von einer Kamera lesbar ist, so dass beispielsweise nicht von außerhalb des Fahrzeugs durch eine Fahrzeugscheibe hindurch ein solcher Code ausgelesen werden kann. Durch die Verwendung eines QR-Codes ergibt sich hierbei der besondere Vorteil, dass ein im Fahrzeug dynamisch generierter und auf dem Bildschirm angezeigter QR-Code mehrere geheime Codes für die gleichzeitige Kopplung des Kommunikationsgeräts mit verschiedenen Schnittstellen enthalten kann, also insbesondere die Kenndaten des Fahrzeugs für den Eintrag in die Benutzerdatenbank der Servereinrichtung und gleichzeitig einen Bluetooth-PIN und/oder einen WLAN-Schlüssel (z. B. WPA2).

Ein unbefugtes Mitlesen von Daten kann möglich sein, wenn die Übertragungseinrichtung, über die das Fahrzeug mit dem mobilen Kommunikationsgerät Daten austauscht, auf einer drahtlosen Verbindungstechnologie basiert. Wird hier beispielsweise eine WLAN-Verbindung genutzt, so kann diese von Dritten abgehört werden. Es kann dann sein, dass eine unbefugte Person über eine solche drahtlose Verbindungstechnologie die Kenndaten des Fahrzeugs ausliest und sie in ihrem eigenen Benutzerkonto der Servereinrichtung einträgt. Dann könnte diese Person stets die Betriebsdaten des Fahrzeugs mitverfolgen oder sogar Geräte des Fahrzeugs verstellen. In Verbindung mit der Nutzung einer drahtlosen Verbindungstechnologie als Übertragungseinrichtung sieht deshalb eine Ausführungsform des erfindungsgemäßen Verfahrens vor, eine NFC-Verbindung (NFC - Near Field Communication, Nahfeldkommunikation) und/oder eine RFID-Verbindung (RFID - Radio-frequency identification) genutzt wird. Diese Verbindungstechnologien haben verhältnismäßig kurze Reichweiten, sodass ein unbefugtes Mitlesen oder sogar das Auslösen eines Sendevorgangs, durch welchen das Fahrzeug seine Kenndaten preisgibt, für Personen außerhalb des Fahrzeugs erschwert wird.

Eine andere Weiterbildung des erfindungsgemäßen Verfahrens sieht vor, die Kenndaten zusätzlich durch das Fahrzeug über eine weitere Netzwerkverbindung unmittelbar zur Servereinrichtung zu übertragen. Die Servereinrichtung führt dann das beschriebene Speichern der Kenndaten in der Benutzerdatenbank nur durch, wenn die von dem mobilen Kommunikationsgerät einerseits und die vom Fahrzeug andererseits übertragenen Kenndaten übereinstimmen. Hierdurch wird in vorteilhafter Weise verhindert, dass das Eintragen der Kennungsdaten unabhängig von dem Fahrzeug durchgeführt wird. So ist es einer unbefugten Person nicht möglich, über das Internetportal in ihrem eigenen Benutzerkonto beliebige Kennungsdaten einzutragen. Der Benutzer muss stets soviel Kontrolle über das entsprechende Fahrzeug haben, dass dieses auch von sich aus die Kenndaten zu der Servereinrichtung überträgt.

Wie bereits ausgeführt, muss das Auslesen der Kennungsdaten durch unbefugte Personen auch unmittelbar am Fahrzeug selbst vermieden werden. Hierzu sieht eine Weiterbildung des Verfahrens vor, dass durch das Fahrzeug die Kennungsdaten über die Übertragungseinrichtung nur ausgegeben werden, wenn von dem Benutzer eine im Fahrzeug bereitgestellte Auslöseeinrichtung betätigt wird, also etwa eine entsprechende Funktion in einem Menü eines Infotainmentsystems ausgewählt wird. Mit dem Betätigen der Auslöseeinrichtung beginnt dann eine Koppelphase, die eine vorbestimmte Zeitdauer aufweist und während welcher das Fahrzeug die Kennungsdaten beispielsweise in Form eines Barcodes auf einem Bildschirm anzeigt. Nach Beendigung der Koppelphase wird die Anzeige dann wieder gelöscht.

Eine andere Weiterbildung des Verfahrens sieht in diesem Zusammenhang vor, dass das Fahrzeug seine Kennungsdaten über die Übertragungseinrichtung nur ausgibt, falls durch das Fahrzeug ein berechtigter Fahrzeugschlüssel des Fahrzeugs erkannt. Bei einem solchen Fahrzeugschlüssel kann es sich beispielsweise um einen in ein entsprechendes Zündschloss des Fahrzeugs eingesteckten Schlüssel oder aber auch einen Identifikationschip eines Keyless-Go-Systems handeln.

Das Mitlesen der Kennungsdaten während der Übertragung über die Übertragungseinrichtung wird gemäß einer Weiterbildung des Verfahrens dadurch vermieden, dass das Fahrzeug die über die Übertragungseinrichtung zu übertragenden Daten vor der Übertragung verschlüsselt.

Bisher ist nur beschrieben worden, wie mittels des erfindungsgemäßen Verfahrens die Kenndaten des Fahrzeugs sicher und einfach in der Benutzerdatenbank der Servereinrichtung eingetragen werden können. Bevorzugt wird bei dem erfindungsgemäßen Verfahren aber auch durch die Servereinrichtung an das Fahrzeug eine Koppelinformation übertragen (beispielsweise ein PIN oder ein Zertifikat zur Datenverschlüsselung). Das Fahrzeug baut dann zukünftig selbstständig eine Datenverbindung zu der Servereinrichtung und/oder zu dem mobilen Kommunikationsgerät auf und authentifiziert diese Datenverbindung hierbei auf Grundlage dieser Koppelinformation. Hierdurch ergibt sich der Vorteil, dass durch ein Steuergerät des Fahrzeugs Betriebsinformationen, wie beispielsweise ein aktueller Batterieladezustand oder auch eine Nachricht betreffend das Ablaufen eines Serviceintervalls des Fahrzeugs, für den Benutzer an der Servereinrichtung hinterlegt werden kann. Hierbei muss der Benutzer nicht im Internet-Portal angemeldet sein bzw. von sich aus über sein mobiles Kommunikationsgerät die Verbindung zum Fahrzeug aufgebaut haben. Durch die Koppelinformation wird dem empfangenden Gerät angezeigt, dass der Benutzer mit der Hinterlegung dieser Informationen durch ein Steuergerät des Fahrzeugs einverstanden ist.

Eine andere Weiterbildung des Verfahrens sieht vor, dass das mobile Kommunikationsgerät eine Mobilfunknummer an die Servereinrichtung übermittelt. Dann kann durch den Fahrzeughersteller eine Mobilfunkverbindung zu dem mobilen Kommunikationsgerät aufgebaut werden. So kann der Benutzer beispielsweise durch SMS-Nachrichten (SMS - Short Message Service) oder Anrufe von einem Call-Center kontaktiert werden.

Eine andere Weiterbildung des erfindungsgemäßen Verfahrens sieht vor, dass durch das Fahrzeug über die Datenübertragungseinrichtung zusätzlich ein Kommunikationsschlüssel übermittelt wird, insbesondere ein Bluetooth-Schlüssel und/oder ein WLAN-Schlüssel. Dies setzt natürlich voraus, dass die Datenübertragungseinrichtung selbst mit einer anderen Verbindungstechnologie realisiert ist als diejenige Kommunikationstechnologie, für welche der Kommunikationsschlüssel genutzt werden soll (sog. "Out-of-Band Übertragung"). Nach dem Austausch des Kommunikationsschlüssels kann der Benutzer dann sehr bequem eine Freisprechanlage des Fahrzeugs oder auch den Internetzugang nutzen, wie er durch das Fahrzeug bereitgestellt wird. Durch die automatisierte Übertragung des Kommunikationsschlüssels bleibt es dem Benutzer in vorteilhafter Weise erspart, für eine Bluetooth-Verbindung bzw. eine WLAN-Verbindung die entsprechenden Sicherheitscodes, also etwa den bereits erwähnten Bluetooth-PIN und den WPA2-Schlüssel, händisch einzugeben.

Um bequem überprüfen zu können, ob die entsprechenden Verbindungen erfolgreich hergestellt wurden, sieht eine Ausführungsform des Verfahrens vor, zwischen dem Kommunikationsgerät und dem Fahrzeug einen vorbestimmten Testdatensatz über eine WLAN-Verbindung oder ein Bluetooth-Verbindung auszustauschen und anschließend den ausgetauschten Datensatz daraufhin zu überprüfen, ob er fehlerfrei übertragen wurde. Eine bevorzugte Ausführungsform sieht hier vor, dass für den Verbindungstest eine Audiodatei übertragen wird, die dann von dem empfangenden Gerät abgespielt wird, also beispielsweise eine Ansage wie: "Die Kopplung ist erfolgreich hergestellt."

Wie bereits ausgeführt, gehören zu der Erfindung auch einige Vorrichtungen. Der erfindungsgemäße Kraftwagen weist einen Bildschirm und eine Schnittstelleneinrichtung auf. Bei der Schnittstelleneinrichtung kann es sich beispielsweise um ein Infotainmentsystem oder eine andere Mensch-Maschine-Schnittstelle handeln. Die Schnittstelleneinrichtung ist dabei dazu eingerichtet, Kenndaten des Kraftwagens als graphische Information auf dem Bildschirm anzuzeigen, insbesondere als Bar-Code oder QR-Code.

Der erfindungsgemäße Datenträger (insbesondere in einem mobilen Kommunikationsgerät) zeichnet sich dadurch aus, dass auf ihm ein Programmcode gespeichert ist, durch welchen bei Ausführen durch ein mobiles Kommunikationsgerät dieses denjenigen Teil einer Ausführungsform des erfindungsgemäßen Verfahrens durchführt, der durch das mobile Kommunikationsgerät auszuführen ist. Bei dem Programmcode kann es sich beispielsweise um eine so genannte "App" handeln, wie sie über Internet-Portale von Software-Anbietern bezogen werden können. Durch Installieren einer solchen "App" oder eines anderen Programmcodes auf einem Datenträger eines mobilen Kommunikationsgeräts kann ein mobiles Kommunikationsgerät gemäß der Erfindung realisiert werden. Mit anderen Worten ist das erfindungsgemäße mobile Kommunikationsgerät dann dazu eingerichtet, den das mobile Kommunikationsgerät betreffenden Teil einer Ausführungsform des erfindungsgemäßen Verfahrens durchzuführen.

Im Folgenden wird die Erfindung noch einmal genauer anhand eines konkreten Ausführungsbeispiels erläutert.

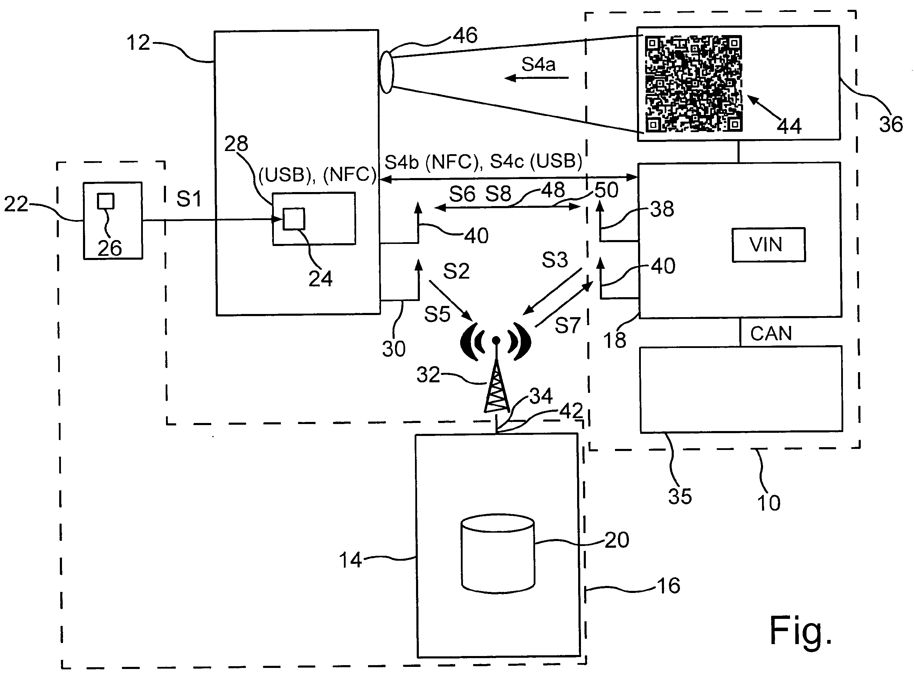

Dazu zeigt die Figur eine schematische Darstellung eines Kraftwagens 10, eines mobiles Kommunikationsgeräts 12 und einer Internet-Servereinrichtung, oder kurz Servereinrichtung 14. Bei einem Kraftwagen 10 kann es sich beispielsweise um einen Personenkraftwagen oder ein Nutzfahrzeug handeln. Bei dem Kommunikationsgerät 12 kann es sich beispielsweise um ein Smartphone, ein Mobiltelefon oder einen Tablet-PC handeln. Die Servereinrichtung 14 kann aus einem einzelnen Computer oder auch aus einer Anlage aus mehreren Computern bestehen. Die Servereinrichtung 14 ist mit dem Internet 16 verbunden, d.h. es kann über das Internet 16 eine Netzwerkverbindung von einem anderen Kommunikationsgerät aus zu ihr aufgebaut werden.

Für das vorliegende Beispiel sei angenommen, dass der Kraftwagen 10 erst kürzlich von einem (nicht dargestellten) Benutzer erworben wurde und der Benutzer den Kraftwagen 10 dahingehend konfigurieren möchte, dass er eine (nicht dargestellte) Freisprechanlage des Kraftwagens 10 von seinem Kommunikationsgerät 12 aus nutzen kann. Des Weiteren möchte er für das Kommunikationsgerät 12 eine (nicht dargestellte) Kommunikationseinheit eines Infotainmentsystems 18 des Kraftwagens 10 als Router für einen Zugang zum Internet 16 konfigurieren. Zusätzlich möchte er den Kraftwagen 10 in einer Benutzerdatenbank 20 der Servereinrichtung 14 als seinen Kraftwagen eintragen. Schließlich möchte er von dem Kommunikationsgerät 12 aus über die Servereinrichtung 14 Betriebsdaten des Kraftwagens 10 auslesen können. Handelt es sich bei dem Kraftwagen 10 beispielsweise um ein Elektrofahrzeug, so könnte er sich dann mit seinem Kommunikationsgerät 12 den Ladezustand anzeigen lassen, das Ladegerät steuern oder die Einschaltzeit und Temperatur für die Fahrzeugklimatisierung programmieren.

Um die beschriebenen Konfigurationsschritte durchzuführen, muss der Benutzer zunächst die hierfür nötigen Datenverbindungen zwischen dem Kommunikationsgerät 12, dem Kraftwagen 10 und der Servereinrichtung 14 einrichten. Der Benutzer lädt dazu zunächst in einem Schritt S1 von einem Programmserver 22 des Internets 16 eine Kopie einer Programms 26, die als Zugangssoftware 26 in einem Speicher 28 des Kommunikationsgeräts 12 gespeichert wird. Für einen mobilen Zugang zum Internet 16 weist Kommunikationsgerät 12 in der bekannten Weise eine Mobilfunkeinrichtung 30 zum Übertragen von Daten in einem Mobilfunknetz 32 auf. Bei dem Mobilfunknetz 32 kann es sich beispielsweise um ein Wide-Area-Netz handeln, das auf zumindest einer der folgenden, bekannten Technologien basiert: GPRS, UMTS, LTE.

Mittels der Zugangssoftware 24 authentifiziert sich der Benutzer in einem Schritt S2 über eine Internetverbindung oder Netzwerkverbindung 34 bei der Servereinrichtung 14. Die Netzwerkverbindung kann z.B. auf dem TCP/IP-Protokoll basieren (TCP - Transfer Control Protocol; IP - Internet Protocol). Bei der Netzwerkverbindung 34 kann es sich um eine verschlüsselte Verbindung handeln, wie sie in an sich bekannter Weise mittels des Protokolls HTTPS (secure hypertext transfer protocol) aufgebaut werden kann.

Der Benutzer gibt hierzu über das Kommunikationsgerät 12 zu seinem Benutzerkonto bei der Servereinrichtung 14 einen Benutzernamen sowie ein Passwort an, die beide von der Zugangssoftware 24 an die Servereinrichtung 14 übermittelt werden. Falls der Benutzer noch kein Benutzerkonto bei der Servereinrichtung 14 hat, d. h. noch keine Dateneinträge in der Datenbank 20 für ihn existieren, kann er sich auch neu bei der Servereinrichtung 14 registrieren.

Nachdem durch die Servereinrichtung 12 der Benutzername und das Passwort verifiziert wurden überträgt die Zugangssoftware 24 eine eindeutige Kennung des Kommunikationsgeräts 12 (UUID - Universally Unique Identifier) sowie optional die Mobiltelefonnummer (MSISDN) des Kommunikationsgeräts 12 zur Speicherung in der Benutzerdatenbank 20 als Teil der Benutzerdaten des Benutzers.

Für einen nächsten Konfigurationsschritt begibt sich der Benutzer in den Kraftwagen 10, startet das Infotainmentsystem 18 durch Einstecken eines berechtigten Fahrzeugschlüssels. Ein Fahrberechtigungssystem 35 erkennt den Fahzeugschlüssel als berechtigt und schaltet die Elektronik des Kraftwagens 10 in bekannter Weise frei. Der Benutzer ruft daraufhin in einem Bedienmenü des Infotainmentsystems 18 die Funktion "Koppeln" auf. Gegebenenfalls können hierzu Bedienungshinweise zur Unterstützung auf einen Bildschirm 36 des Fahrzeugs 10 angezeigt werden. Durch den Aufruf der Funktion "Koppeln" wird eine Bluetooth-Schnittstelle und/oder WLAN-Schnittstelle 38 in einen Koppelmodus geschaltet. Im Koppelmodus ist es in bekannter Weise ermöglicht, von außerhalb des Infotainmentsystems 18 beispielsweise mittels einer Bluetooth-Schnittstelle und/oder WLAN-Schnittstelle 40 des Kommunikationsgeräts 12 eine Verbindung zu dem Infotainmentsystem 18 aufzubauen.

Des Weiteren baut das Infotainmentsystem 18 in einem Schritt S3 über eine Mobilfunkeinheit 40 eine verschlüsselte Mobilfunk-Datenverbindung als Netzwerkverbindung 42 (beispielsweise basierend auf dem TCP/IP-Protokoll) zu der Servereinrichtung 14 auf und überträgt eine Fahrgestellnummer (VIN - Vehicle Identification Number) und ein öffentliches Fahrzeugzertifikat (VCERT - Vehicle Certificate) an die Servereinrichtung 14. In der Mobilfunkeinheit 40 ist hierzu eine fahrzeugeigene SIM-Karte (SIM - Subscriber Identity Module) eingebaut.

In einem weiteren Schritt S4a zeigt das Infotainmentsystem auf dem Bildschirm 36 einen dynamisch generierten 2D-Barcode (QR-Code) 44 an. In diesem QR-Code können folgende, mit dem Fahrzeugzertifikat verschlüsselte und signierte Informationen enthalten sein:
- Fahrgestellnummer (VIN)
- öffentliches Zertifikat des Fahrzeugs (VCERT)
- BT-MAC-Adresse (BT-MAC: Bluetooth-Medium Access Control)
- Bluetooth Secure-Simple-Pairing-PIN (BT-SSP PIN, Bluetooth-PIN)
- WLAN-Stationserkennung (SSID)
- WLAN-WPA2-Pre-shared Key (WPA2, PSK, WLAN-Schlüssel).

Der Benutzer fotografiert mit einer Kamera 46 des Kommunikationsgeräts 12 den QR-Code 44 ab.

Die Zugangssoftware 24 dekodiert und entschlüsselt die Informationen aus dem QR-Barcode 44 und sendet die Fahrgestellnummer und das Fahrzeugzertifikat in einem Schritt S5 über die Netzwerkverbindung 34 an die Servereinrichtung 14. In dem QR-Code 44 kann auch eine Kennnummer des eingesteckten Fahrzeug-Zündschlüssels (Carkey-ID) enthalten sein. Diese kann dann ebenfalls von der Zugangssoftware 24 zu der Servereinrichtung 14 übertragen werden.

In einem Schritt S6 nutzt die Zugangssoftware 24 die Bluetooth-MAC-Adresse und die Bluetooth-Secure-Simple-Pairing-PIN zur Kopplung der Bluetooth-Schnittstelle 40 mit der Bluetooth-Schnittstelle 38 des Infotainmentsystems 18. Genauso nutzt die Zugangssoftware 24 die WLAN-Stationserkennung und den WLAN-WPA2-Schlüssel zur Kopplung der WLAN-Schnittstelle 40 mit der entsprechenden WLAN-Schnittstelle 38 des Infotainmentsystems 18. Damit kann von nun an ohne weitere Authentifizierung ein sicherer Datenaustausch zwischen dem Kommunikationsgerät 12 und dem Infotainmentsystem 18 durchgeführt werden.

In einem Schritt S7 vergleicht die Servereinrichtung 14 die vom Kraftwagen 10 erhaltene VIN und das VCERT mit dem von der Zugangssoftware 24 erhaltene VIN und VCERT. Falls auch der Fahrzeugschlüssel im QR-Code 44 enthalten war, so kann auch diester vom Fahrzeug 10 an die Servereinrichtung 14 geschickt werden und ebenfalls zur Identifikation genutzt werden. Falls die verglichenen Daten übereinstimmen, trägt die Servereinrichtung 14 für das Benutzerkonto des Benutzers die VIN in der Benutzerdatenbank 20 ein. Des Weiteren schickt die Servereinrichtung 14 über die Netzwerkverbindung 42 beispielsweise mit dem an sich bekannten Mobilfunk-Push-Verfahren eine Benachrichtigung mit einer Koppelinformation an den Kraftwagen 10. Mittels dieser Koppelinformation ist es von nun an möglich, dass durch das Infotainmentsystem 18 eine sichere Verbindung zur Servereinrichtung 14 aufgebaut wird, die dann auch sofort dem Benutzerkonto des Benutzers zugeordnet werden kann. Außerdem kann mittels der Koppelinformation auch eine Verbindung zu dem Kommunikationsgerät 12 aufgebaut werden. Bei der Koppelinformation kann es beispielsweise sich um eine PIN oder ein Zertifikat handeln.

In einem optionalen Schritt S8 kann die Zugangssoftware 24 auch einen Verbindungstest einer WLAN-Verbindung 48 durch Austausch eines Testdatensatzes mit dem Infotainmentsystem 18 sowie einer Bluetooth-Verbindung 50 durchführen. So kann beispielsweise ein Jingle (kurze Audiodatei) übertragen und abgespielt werden, also etwa Audiodaten mit dem Inhalt: "Die Kopplung ist erfolgreich hergestellt. Willkommen!"

Alternativ zu dem Schritt S4a kann in einem Schritt S4b ein gleichwertiger Koppelmechanismus zwischen dem Fahrzeug und dem Kommunikationsgerät 12 an Stelle der optischen Erkennung mittels QR-Code 44 und Kamera 46 auch über eine NFC-Verbindung oder auch in einem Schritt S4c über ein Kabel realisiert werden. Die Datenverbindung über das Kabel kann beispielsweise auf Basis von USB erfolgen.

Durch das Beispiel ist gezeigt, wie die eingangs beschriebenen umständlichen einzelnen Koppelschritte durch das erfindungsgemäße Verfahren entfallen können. Es wird hierzu weder kostenintensive Hardware im Fahrzeug benötigt, noch muss das mobile Kommunikationsgerät über eine spezielle, nicht serienmäßig enthaltene Hardware verfügen. Nach dem Installieren einer kostenlosen Zugangssoftware 24, die beispielsweise aus einem Datenserver 22 aus dem Internet bezogen werden kann, auf dem Kommunikationsgerät 12 und dem Anmelden am Internetportal der Servereinrichtung 14, muss z.B. lediglich noch der im Fahrzeug angezeigte QR-Code 44 abfotografiert werden und alle gewünschten Kopplungen (WLAN, Bluetooth, Fahrzeugnummereintrag in der Benutzerdatenbank 20) werden in einem Arbeitsgang ohne weitere manuelle Eingaben automatisch ausgeführt.

## Patentansprüche

1. Verfahren zum Eintragen von Kennungsdaten (VIN) eines Fahrzeugs (10) in eine Benutzerdatenbank (20) einer Internet-Servereinrichtung (14), mit den Schritten:
- Aufbauen einer Netzwerkverbindung (34) über das Internet (16) zu der Servereinrichtung (14),
- Übertragen der Kennungsdaten (VIN) über die Netzwerkverbindung (34) zu der Servereinrichtung (14), wobei
- die Kennungsdaten (VIN) durch ein mobiles Kommunikationsgerät (12) übertragen werden, das zusätzlich mittels einer Übertragungseinrichtung (S4a, S4b, S4c) zum Übertragen von Daten mit dem Fahrzeug (10) gekoppelt wird, wobei die Übertragungseinrichtung (S4a) umfasst, dass durch das Fahrzeug zumindest die Kennungsdaten (VIN) als graphische Information (44) auf einem Bildschirm (36) des Fahrzeugs angezeigt werden und durch eine Kamera (46) des mobilen Kommunikationsgeräts (12) die graphischen Informationen erfasst werden, und wobei
- die Kennungsdaten (VIN) durch das Kommunikationsgerät (12) über die Datenübertragungseinrichtung (S4a, S4b, S4c) aus dem Fahrzeug (10) empfangen werden,
**gekennzeichnet durch**
Authentifizieren eines Benutzers an einem Internet-Portal der Servereinrichtung (14) und Speichern der Kennungsdaten (VIN) als Teil von Benutzerdaten des Benutzers in der Benutzerdatenbank (20) **durch** die Servereinrichtung, wobei die Kennungsdaten (VIN) zusätzlich **durch** das Fahrzeug (10) über eine weitere Netzwerkverbindung (42) unmittelbar zur Servereinrichtung (14) übertragen werden und die Servereinrichtung (14) das Speichern nur durchführt, wenn die von dem mobilen Kommunikationsgerät (12) und die vom Fahrzeug (10) übertragenen Kennungsdaten (VIN) übereinstimmen.

2. Verfahren nach Anspruch 1, wobei die graphische Information (44) als Bar-Code oder als QR-Code (44) ausgestaltet ist.

3. Verfahren nach Anspruch 1 oder 2, wobei die Übertragungseinrichtung (S4c) umfasst, dass das mobile Kommunikationsgerät (12) an das Fahrzeug (10) über eine Kabelverbindung, insbesondere eine USB-Verbindung, angeschlossen wird.

4. Verfahren nach einem der vorhergehenden Ansprüche, wobei die Übertragungseinrichtung (S4b) umfasst, dass das mobile Kommunikationsgerät (12) mit dem Fahrzeug mittels einer drahtlosen Verbindungstechnologie, insbesondere eine NFC-Verbindung und/oder eine RFID-Verbindung, kommuniziert.

5. Verfahren nach einem der vorhergehenden Ansprüche, wobei durch das Fahrzeug (10) die Kennungsdaten (VIN) über die Übertragungseinrichtung (S4a, S4b, S4c) nur während einer Koppelphase ausgegeben werden, welche eine vorbestimmte Zeitdauer aufweist und welche von dem Benutzer durch Betätigen einer Auslöseeinrichtung des Fahrzeugs (10) gestartet wird.

6. Verfahren nach einem der vorhergehenden Ansprüche, wobei das Fahrzeug (10) die Kennungsdaten über die Übertragungseinrichtung (S4a, S4b, S4c) nur ausgibt, falls durch das Fahrzeug (10) ein berechtigter Fahrzeugschlüssel des Fahrzeugs (10) erkannt wird.

7. Verfahren nach einem der vorhergehenden Ansprüche, wobei durch das Fahrzeug (10) die über die Übertragungseinrichtung (S4a, S4b, S4c) zu übertragenden Daten verschlüsselt werden.

8. Verfahren nach einem der vorhergehenden Ansprüche, wobei durch die Servereinrichtung (14) an das Fahrzeug eine Koppelinformation übertragen wird (S7) und durch das Fahrzeug selbständig eine Datenverbindung zu der Servereinrichtung und/oder zu dem mobilen Kommunikationsgerät aufgebaut wird und diese Datenverbindung hierbei auf Grundlage der Koppelinformation authentifiziert wird.

9. Verfahren nach einem der vorhergehenden Ansprüche, wobei das mobile Kommunikationsgerät (12) eine Mobilfunknummer an die Servereinrichtung (14) übermittelt und damit ein Fahrzeughersteller des Fahrzeugs per SMS oder Anruf von einem Callcenter Kontakt zum Kunden über dessen mobiles Kommunikationsgerät (12) aufnehmen kann.

10. Verfahren nach einem der vorhergehenden Ansprüche, wobei durch das Fahrzeug (10) über die Datenübertragungseinrichtung (S4a, S4b, S4c) zusätzlich einen Kommunikationsschlüssel, insbesondere einen Bluetooth-Schlüssel und/oder ein WLAN-Schlüssel, übermittelt wird.

11. Verfahren nach Anspruch 10, wobei durch das mobile Kommunikationsgerät (12) und das Fahrzeug ein vorbestimmter Testdatensatz über eine WLAN-Verbindung (48) und/oder eine Bluetooth-Verbindung (50) ausgetauscht wird und der ausgetauschte Testdatensatz daraufhin automatisch oder durch den Benutzer überprüft wird, ob er fehlerfrei übertragen wurde.

## Claims

1. Method of entering identification data (VIN) of a motor vehicle (10) in a user database (20) of an internet server system (14) with the steps:
- establishment of a network connection (34) via the internet (16) to the server system (14),
- transmission of the identification data (VIN) via the network connection (34) to the server system (14), wherein
- the identification data (VIN) are transmitted via a mobile communication device (12) which is additionally connected to the vehicle (10) by means of a transmission device (S4a, S4b, S4c) for transmitting data, wherein the transmission device (S4a) includes that at least the identification data (VIN) is shown by the vehicle as graphic information (44) on the display (36) of the vehicle, and through a camera (46) of the mobile communication device (12) the graphic information is recorded, and wherein
- the identification data (VIN) are received by the communication device (12) via the data transmission device (S4a, S4b, S4c) from the vehicle (10),
**characterised by**
authentication of a user on an internet portal of the server system (14) and saving of the identification data (VIN) as part of the user's user data in the user database (20) by the server system, wherein the identification data (VIN) are additional transmitted by the vehicle (10) via another network connection (42) directly to the server system (14) and the server system (14) only carries out storage if the identification data (VIN) transmitted by the mobile communication device (12) and by the vehicle (10) correspond.

2. Method according to claim 1 wherein the graphic information (44) is in the form of a bar code or a QR code (44).

3. Method according to claim 1 or 2 wherein the transmission device (S4c) includes the mobile communication device (12) being connected to the vehicle (10) via a cable connection, more particularly a USB connection.

4. Method according to any one of the preceding claims wherein the transmission device (S4b) includes the mobile communication device (12) communicating with the vehicle by means of wireless connection technology, more particularly an NFC connection and/or an RFID connection.

5. Method according to any one of the preceding claims wherein the identification data (VIN) are only issued by the vehicle (10) via the transmission device (S4a, S4b, S4c) during a coupling phase which is of a predetermined duration and which is started by the user through the operation of an activation device of the vehicle (10).

6. Method according to any one of the preceding claims wherein the vehicle (10) only issues the identification data via the transmission device (S4a, S4b, S4c) if the vehicle (10) recognises an authorised vehicle key of the vehicle (10).

7. Method according to any one of the preceding claims wherein the data to be transmitted via the transmission device (S4a, S4b, S4c) is encrypted by the vehicle (10).

8. Method according to any one of the preceding claims wherein coupling information is transmitted (S7) by the server system (14) to the vehicle and independently by the vehicle a data connection to the server system and/or to the mobile communication device is set up and this data connection is authenticated on the basis of the coupling information.

9. Method according to any one of the preceding claims wherein the mobile communication device (12) forwards a mobile telephone number to the server system (14) and with this a vehicle manufacturer of the vehicle can contact the customer via his mobile communication device (12) by text message or call from a call centre.

10. Method according to any one of the preceding claims wherein via the data transmission device (S4a, S4b, S4c) a communications key, more particularly a Bluetooth key and/or a WLAN key is also transmitted by the vehicle (10).

11. Method according to claim 10 wherein a predetermined test data set is exchanged by the mobile communications device (12) and the vehicle (10) via a WLAN connection (48) and/or a Bluetooth connection (50) and the exchanged test data set is checked automatically or by the user as to whether it has been transmitted without errors.

## Revendications

1. Procédé pour enregistrer des données d'identification (VIN) d'un véhicule (10) dans une base de données d'utilisateur (20) d'un dispositif serveur Internet (14), avec les étapes :
- établissement d'une liaison de réseau (34) par l'intermédiaire d'Internet (16) vers le dispositif serveur (14),
- transmission des données d'identification (VIN) par l'intermédiaire de la liaison de réseau (34) vers le dispositif serveur (14),
- les données d'identification (VIN) étant transmises par un appareil de communication mobile (12) qui est couplé en plus au véhicule (10) au moyen d'un dispositif de transmission (S4a, S4b, S4c) pour la transmission de données, le dispositif de transmission (S4a) comprenant le fait qu'au moins les données d'identification (VIN) sont affichées par le véhicule sous forme d'informations graphiques (44) sur un écran (36) du véhicule et que les informations graphiques sont acquises par une caméra (46) de l'appareil de communication mobile (12),
- les données d'identification (VIN) étant reçues par l'appareil de communication (12) par l'intermédiaire du dispositif de transmission de données (S4a, S4b, S4c) en provenance du véhicule (10),
**caractérisé par** :
- l'authentification d'un utilisateur sur un portail Internet du dispositif serveur (14) et la mémorisation des données d'identification (VIN) comme partie de données d'utilisateur de l'utilisateur dans la base de données d'utilisateur (20) par le dispositif serveur, les données d'identification (VIN) étant transmises en plus par le véhicule (10) par l'intermédiaire d'une autre liaison de réseau (42) directement au dispositif serveur (14) et le dispositif serveur (14) n'effectuant la mémorisation que si les données d'identification (VIN) transmises par l'appareil de communication mobile (12) et celles transmises par le véhicule (10) coïncident.

2. Procédé selon la revendication 1, selon lequel les informations graphiques (44) sont conçues comme un code-barres ou un code QR (44).

3. Procédé selon la revendication 1 ou 2, selon lequel le dispositif de transmission (S4c) comprend le fait que l'appareil de communication mobile (12) est raccordé au véhicule (10) par l'intermédiaire d'une liaison câblée, notamment une liaison USB.

4. Procédé selon l'une des revendications précédentes, selon lequel le dispositif de transmission (S4b) comprend le fait que l'appareil de communication mobile (12) communique avec le véhicule au moyen d'une technologie de liaison sans fil, notamment une liaison NFC et/ou une liaison RFID.

5. Procédé selon l'une des revendications précédentes, selon lequel les données d'identification (VIN) ne sont délivrées par le véhicule (10) par l'intermédiaire du dispositif de transmission (S4a, S4b, S4c) que pendant une phase de couplage qui a une durée prédéterminée et qui est démarrée par l'utilisateur par l'actionnement d'un dispositif de déclenchement du véhicule (10).

6. Procédé selon l'une des revendications précédentes, selon lequel le véhicule (10) ne délivre les données d'identification par l'intermédiaire du dispositif de transmission (S4a, S4b, S4c) que si une clé autorisée du véhicule (10) est reconnue par le véhicule (10).

7. Procédé selon l'une des revendications précédentes, selon lequel les données à transmettre par l'intermédiaire du dispositif de transmission (S4a, S4b, S4c) sont cryptées par le véhicule (10).

8. Procédé selon l'une des revendications précédentes, selon lequel une information de couplage est transmise (S7) au véhicule par le dispositif serveur (14), selon lequel une liaison de données vers le dispositif serveur et/ou vers l'appareil de communication mobile est établie indépendamment par le véhicule et selon lequel cette liaison de données est alors authentifiée sur la base de l'information de couplage.

9. Procédé selon l'une des revendications précédentes, selon lequel l'appareil de communication mobile (12) transmet un numéro de radiocommunication mobile au dispositif serveur (14) et, avec ledit numéro, le fabricant du véhicule peut entrer en contact avec le client par SMS ou par un appel à partir d'un centre d'appel par l'intermédiaire de l'appareil de communication mobile (12) dudit client.

10. Procédé selon l'une des revendications précédentes, selon lequel le véhicule (10) transmet en plus par l'intermédiaire du dispositif de transmission de données (S4a, S4b, S4c) une clé de communication, notamment une clé Bluetooth et/ou une clé WLAN.

11. Procédé selon la revendication 10, selon lequel l'appareil de communication mobile (12) et le véhicule échangent un ensemble prédéterminé de données de test par l'intermédiaire d'une liaison WLAN (48) et/ou d'une liaison Bluetooth (50) et l'ensemble de données de test échangé est ensuite vérifié automatiquement ou par l'utilisateur pour savoir s'il a été transmis sans erreur.
